# EUROPEAN PATENT APPLICATION

(11) **EP 4 800 595 A1**
(43) Date of publication of application: **02.09.2026**
(21) Application number: 25225531.0
(22) Date of filing: 19.12.2025
(51) Int. Cl.: G06F 30/12, G06F 30/15, G06F 30/27, G06F 111/16

(54) **GENERATIVE ARTIFICIAL INTELLIGENCE CONFIGURATION SYSTEM FOR AIRCRAFT INTERIOR DESIGNS**

(30) Priority: 26.02.2025 US 202519063646
(71) Applicant: The Boeing Company, Arlington, VA 22202 (US)
(72) Inventor: Afrasiabi, Amir, Arlington, 22202 (US); Rafati, Sina, Arlington, 22202 (US); Factory, Brett M., Arlington, 22202 (US)
(74) Representative: Witte, Weller & Partner Patentanwälte mbB

(57) **Abstract**

A design system (214) comprises a computer system (212), a machine learning model system (225) and a design generator (130, 214). The design generator (130, 214) is configured to perform operations. The operations include identifying a reference image (134, 220, 300, 420, 500, 600, 700) of a design (201) of an interior (206) of an aircraft (204); identifying engineering data (137, 221, 380) for the design (201); receiving an element selection (222) of elements in the reference image (134, 220, 300, 420, 500, 600, 700) of the design (201) for modification; generating an enhanced image (135, 224, 314, 423) of the design (201) using the elements (223), the element selection (222), and the machine learning model system (225), wherein the elements in the enhanced image (135, 224, 314, 423) are enhanced elements (223); receiving an element modification (228) for modifying the enhanced elements (223); modifying the enhanced elements (223) using the element modification (228) that takes into account the engineering data (137, 221, 380) using the machine learning model system (225) to form a customized image (136, 229, 370, 425, 504, 604, 704) of the design (201) with modified elements (223) in place of enhanced elements (223); and displaying the customized image (136, 229, 370, 425, 504, 604, 704) on a display system (231). (Fig. 1)

## Description

### BACKGROUND INFORMATION

### 1. Field:

The present disclosure relates generally to aircraft and in particular, aircraft interior configurations.

### 2. Background:

Designing interiors such as cabins for aircraft for presentation and feedback by customers is a collaborative and time-consuming process. Design engineers and three-dimensional artists collaborate to generate interior designs. The design engineers and three-dimensional artists spend large amounts of time to design and render aircraft interiors using configuration files from configuration engineering teams. These configuration files provide details such as structures, systems, and constraints. These types of files are highly technical and difficult to understand. Further, not all elements in these files are needed to create the designs and visual representations of the aircraft interiors.

After generating a design, multiplicative rations in changing the design can occur based on feedback from customers. This feedback may result in refining layouts, materials, lighting, seat configurations, and other parts of an aircraft interior design.

### SUMMARY

An embodiment of the present disclosure provides an interior design system comprising a computer system, a machine learning model system in the computer system, and a design generator in the computer system. The design generator is configured to perform operations comprising identifying a reference image of an interior design of an interior of an aircraft; identifying engineering data for the interior design; receiving an element selection of a number of elements in the reference image of the interior design for modification; generating an enhanced image of the interior design using the number of elements in the reference image, the element selection, and the machine learning model system, wherein the number of elements in the enhanced image are a number of enhanced elements; receiving an element modification for modifying the number of enhanced elements in the enhanced image; modifying the number of enhanced elements using the element modification that takes into account the engineering data using the machine learning model system to form a customized image of the interior design with a number of modified elements in place of the number of enhanced elements; and displaying the customized image on a display system.

Another embodiment of the present disclosure provides a method for generating a change to an interior design of an interior of an aircraft. A reference image of the interior design of the interior of the aircraft is identified. Engineering data for the interior design is identified. An element selection of a number of elements in the reference image of the interior design for modification is received. An enhanced image of the interior design is generated using the number of elements in the reference image, the element selection, and the machine learning model system, wherein the number of elements in the enhanced image are a number of enhanced elements. An element modification for modifying the number of enhanced elements in the enhanced image is received. The number of enhanced elements is modified using the element modification that takes into account the engineering data using the machine learning model system to form a customized image of the interior design with a number of modified elements in place of the number of enhanced elements. The customized image is displayed on a display system.

Still another embodiment of the present disclosure provides a computer program product for generating a change to an interior design of an interior of an aircraft. The computer program product comprises a set of one or more computer-readable storage media and program instructions stored on the set of one or more storage media. The program instructions are to perform operations comprising identifying a reference image of the interior design of the interior of the aircraft; identifying engineering data for the interior design; receiving an element selection of a number of elements in the reference image of the interior design for modification; generating an enhanced image of the interior design using the number of elements in the reference image, the element selection, and the machine learning model system, wherein the number of elements in the enhanced image are a number of enhanced elements; receiving an element modification for modifying the number of enhanced elements in the enhanced image; and modifying the number of enhanced elements using the element modification that takes into account the engineering data using the machine learning model system to form a customized image of the interior design with a number of modified elements in place of the number of enhanced elements; and displaying the customized image on a display system.

Yet another embodiment of the present disclosure provides an interior design system comprising a computer system; a generative artificial intelligence model system in the computer system; and a design generator in the computer system. The design generator is configured to perform operations comprising identifying a reference image of an interior design of an interior of a vehicle; identifying engineering data for the interior design; receiving an element selection of a number of elements in the reference image of the interior design for modification; generating an enhanced image of the interior design using the number of elements in the reference image, the element selection, and the machine learning model system, wherein the number of elements in the enhanced image are a number of enhanced elements; receiving an element modification for modifying the number of enhanced elements in the enhanced image; modifying the number of enhanced elements using the element modification that takes into account the engineering data using the machine learning model system to form a customized image of the interior design with a number of modified elements in place of the number of enhanced elements; and displaying the customized image on a display system.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is a pictorial representation of a network of data processing systems in which illustrative embodiments may be implemented;
**Figure 2** is an illustration of a block diagram of a design environment in accordance with an illustrative embodiment;
**Figure 3** is an illustration of a process flow diagram for changing visualization of an interior design in accordance with an illustrative embodiment;
**Figure 4** is an illustration of a process flow diagram for changing visualization of an interior design in accordance with an illustrative embodiment;
**Figure 5** is an illustration of a process flow for customizing an interior of a passenger cabin in accordance with an illustrative embodiment;
**Figure 6** is an illustration of a process flow for customizing an interior of a passenger cabin in accordance with an illustrative embodiment;
**Figure 7** is an illustration of a process flow for customizing an aircraft structure in accordance with an illustrative embodiment;
**Figure 8** is an illustration of a flowchart of a process for generating a change to a design of an interior of an aircraft in accordance with an illustrative embodiment;
**Figure 9** is an illustration of a flowchart of a process for displaying an enhanced image in accordance with an illustrative embodiment;
**Figure 10** is an illustration of a flowchart of a process for generating an enhanced image in accordance with an illustrative embodiment;
**Figure 11** is an illustration of a flowchart of a process for modifying a number of enhanced elements in accordance with an illustrative embodiment;
**Figure 12** is an illustration of a flowchart of a process for generating a change to a design of a vehicle in accordance with an illustrative embodiment;
**Figure 13** is an illustration of a block diagram of a data processing system in accordance with an illustrative embodiment;
**Figure 14** is an illustration of a block diagram of an aircraft manufacturing and service method in accordance with an illustrative embodiment; and
**Figure 15** is an illustration of a block diagram of an aircraft in which an illustrative embodiment may be implemented.

### DETAILED DESCRIPTION

The illustrative embodiments recognize and take into account one or more different considerations as described herein. For example, collaboration between design engineers and three-dimensional artists is time consuming because of a need to balance technical accuracy with visual appeal and take into account customer preferences. Design Engineers interpret configuration files to extract relevant structural and system data. Three-dimensional artists use this data in developing detailed models and photorealistic renderings of the cabin interiors. This process involves multiple iterative cycles where customer feedback leads to design revisions, requiring adjustments to both technical components and visual elements. Each iteration adds to the workload. For example, even a minor change based on requests or ideas from a customer can affect the design in which updates, re-rendering, and technical validation are performed to meet customer expectations. Further, in some cases, third party design companies are involved increasing the complexity in coordination and time.

Thus, the illustrative examples provide a method, apparatus, system, and computer program product for generating aircraft interior designs. In the illustrative examples, a machine learning model such as a generative artificial intelligence model can be used in the design process. This model enables creating visualizations of interior details much faster than the current process. For example, the manner in which the generative artificial intelligence model are used in the illustrative examples provide a much quicker rendering of interior details such as seat colors, material changes, and placements compared to current techniques. Currently, design engineers work in coordination with three-dimensional design artists to create models and make changes using a computer-aided design system.

Furthermore, simulation of the construction of the aircraft interior can also be performed. The simulation can determine whether conflicts may occur between the design and the structure and systems in the aircraft. As a result, this type of simulation can reduce the amount of time needed to handle changes that may arise during program development thereby reducing the overall cost.

In one illustrative example, an interior design system comprises a computer system; a generative artificial intelligence model system in the computer system; and a design generator in the computer system. The design generator is configured to identify a reference image of an interior design of an interior of a vehicle and identify engineering data for the interior design and receive an element selection of a number of elements in the reference image of the interior design for modification. The design generator is configured to generate an enhanced image of the interior design using the number of elements in the reference image, the element selection, and the machine learning model system. The number of elements in the enhanced image are a number of enhanced elements. An element modification for modifying the number of enhanced elements in the enhanced image is received. The design generator is configured to modify the number of enhanced elements using the element modification that takes into account the engineering data and using the machine learning model system to form a customized image of the interior design with a number of modified elements in place of the number of enhanced elements. The design generator is configured to display the customized image on a display system.

In the different illustrative examples, the generation of the customized image with modifications to selected elements in the image for the design is based on input selecting the elements and identifying the modification. Further, these modifications take into account engineering data that provides information with respect to the elements. This information can also include what changes can be made to the elements. As a result, the changes made based on the modifications identified are realistic changes to the design that can be used in manufacturing or reconfiguring a platform such as an aircraft.

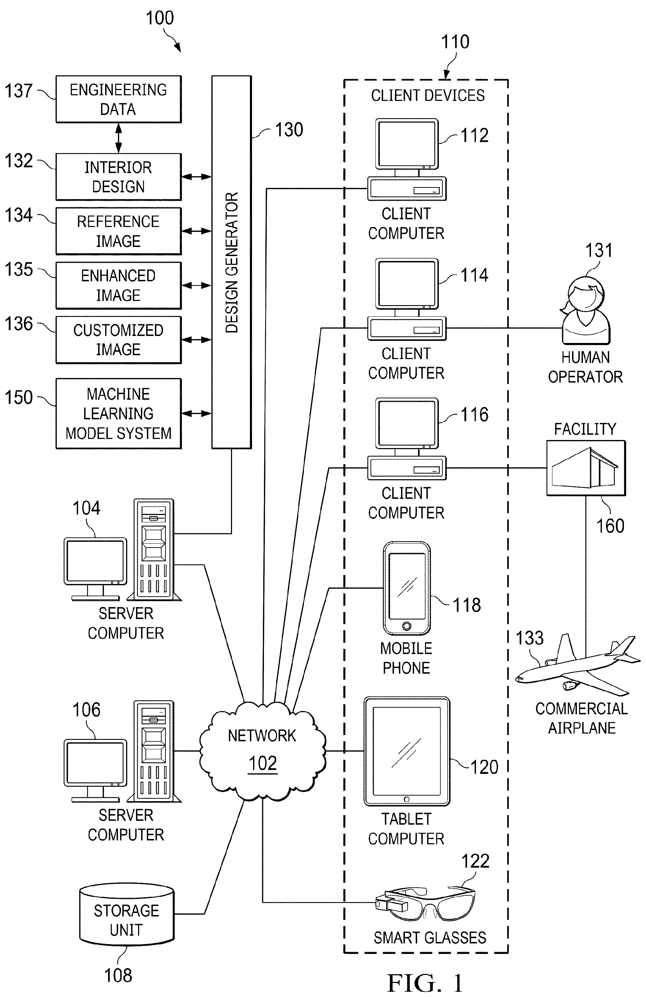

With reference now to the figures and, in particular, with reference to **Figure 1****,** a pictorial representation of a network of data processing systems is depicted in which illustrative embodiments may be implemented. Network data processing system **100** is a network of computers in which the illustrative embodiments may be implemented. Network data processing system **100** contains network **102,** which is the medium used to provide communications links between various devices and computers connected together within network data processing system **100.** Network **102** may include connections, such as wire, wireless communication links, or fiber optic cables.

In the depicted example, server computer **104** and server computer **106** connect to network **102** along with storage unit **108.** In addition, client devices **110** connect to network **102.** Client devices **110** can be, for example, computers, workstations, network computers, vehicles, machinery, appliances, or other devices that can process data. As depicted, client devices **110** include client computer **112,** client computer **114,** client computer **116,** mobile phone **118,** tablet computer **120,** and smart glasses **122.** Client devices **110** can be, for example, computers, workstations, or network computers. In the depicted example, server computer **104** provides information, such as boot files, operating system images, and applications to client devices **110.**

In the depicted example, server computer **104** provides information, such as boot files, operating system images, and applications to client devices **110.** Further, in this illustrative example, server computer **104,** server computer **106,** storage unit **108,** and client devices **110** are network devices that connect to network **102** in which network **102** is the communications media for these network devices. Some or all of client devices **110** may form an Internet of Things (IoT) in which these physical devices can connect to network **102** and exchange information with each other over network **102.**

Client devices **110** are clients to server computer **104** in this example. Network data processing system **100** may include additional server computers, client computers, and other devices not shown. Client devices **110** connect to network **102** utilizing at least one of wired, optical fiber, or wireless connections.

Program instructions located in network data processing system **100** can be stored on a computer-recordable storage medium and downloaded to a data processing system or other device for use. For example, program instructions can be stored on a computer-recordable storage medium on server computer **104** and downloaded to client devices **110** over network **102** for use on client devices **110.**

In this illustrative example, design generator **130** is located in server computer **104.** This component can operate to at least one of generate or modify interior designs for aircraft.

Further, the phrase "at least one of," when used with a list of items, means different combinations of one or more of the listed items can be used, and only one of each item in the list may be needed. In other words, "at least one of" means any combination of items and a number of items may be used from the list, but not all of the items in the list are required. The item can be a particular object, a thing, or a category.

For example, without limitation, "at least one of item A, item B, or item C" may include item A, item A and item B, or item B. This example also may include item A, item B, and item C or item B and item C. Of course, any combination of these items can be present. In some illustrative examples, "at least one of" can be, for example, without limitation, two of item A; one of item B; and ten of item C; four of item B and seven of item C; or other suitable combinations.

As depicted, human operator **131** can operate client computer **112** and interact with design generator **130** to make changes to interior design **132** for commercial airplane **133.** In this example, design generator **130** can identify reference image **134** for interior design **132** for commercial airplane **133.** Interior design **132** can be a model such as a computer-aided design model for the aircraft cabin in commercial airplane **133.** The identification of reference image **134** can be made from a database of images in a computer-aided design model for the passenger cabin. Design generator **130** can display reference image **134** on client computer **114** to human operator **131.**

This reference image can be for a portion of the interior design such as a portion of a passenger area in the aircraft cabin. In another example, reference image **134** can be for different portions of the design, such as a galley in the aircraft cabin.

Human operator **131** can select a portion of interior design **132** from the reference image through input such as text, voice, or drawing a bounding box around that portion of the design. For example, the portion can be an overhead bin within the aircraft cabin of commercial airplane **133.**

With this example, design generator **130** generates enhanced image **135.** This enhanced image can also be displayed to human operator **131** at client computer **114.** This enhanced image has a number of enhanced elements based on the portion of the aircraft cabin selected for modification. In this example, the number of enhanced elements can be bins in the aircraft cabin. The enhancement can be a graphical indicator that draws attention to the number of enhanced elements, such as highlighting, color, or other graphical indicators that draw attention to the bins.

As used herein, "a number of" when used with reference to items, means one or more items. For example, "a number of enhanced elements" is one or more enhanced elements.

In this illustrative example, human operator **131** can create an element modification. In this illustrative example, human operator **131** can be a reviewer for a customer, a design engineer, or other person. The element modification can also be based on input from human operator **131.** This input can be text or voice providing an explanation of the elements modification.

Additionally, the element modification directed by input from human operator **131** is also made taking into account engineering data **137** for interior design **132.** This engineering data provides tolerances for interior design **132.** Tolerances can be constraints for a value or ranges of values for modifications that are generated by human operators. For example, in modifying bins in interior design **132,** the maximum size for these bins may be defined by tolerances in engineering data **137.** Thus, modifications made by human operator **131** are realistic changes that can actually be implemented in commercial airplane **133.**

In response, design generator **130** modifies the elements generated to form customized image **136** that can be displayed to human operator **131** at client computer **114.** In response to viewing customized image **136,** human operator **131** can approve interior design **132,** make additional modifications to interior design **132** or perform other actions.

Additionally, the modifications to customized image **136** are made to interior design **132.** For example, if interior design **132** is a computer-aided design model, these modifications to customized image **136** are made to the corresponding element or elements in the computer-aided design model.

These modifications may be made to interior design **132** in response to approvals of the modifications by human operator **131.** These updates to interior design **132** can be validated by design engineers before being implemented for commercial airplane **133.** In other examples, these modifications to interior design **132** can be made in response to generated customized image **136.**

In this example, interior design **132** with modifications can be sent to client computer **116** at facility **160** for use in at least one of manufacturing, reconfiguration, or updates to commercial airplane **133** at facility **160.** Facility **160** can be, for example, a manufacturing plant, a maintenance facility, a hanger, or other suitable location for manufacturing or performing modifications to commercial airplane **133.** As a result, modifications can be made to interior design **132** by human operator **131** taking into account engineering data **137.**

In these illustrative examples, image generation and modifications of interior designs can be made using machine learning model system **150.**

In the depicted example, network data processing system **100** is the Internet with network **102** representing a worldwide collection of networks and gateways that use the Transmission Control Protocol/Internet Protocol (TCP/IP) suite of protocols or other networking protocols to communicate with one another. At the heart of the Internet is a backbone of high-speed data communication lines between major nodes or host computers consisting of thousands of commercial, governmental, educational, and other computer systems that route data and messages. Of course, network data processing system **100** also may be implemented using a number of different types of networks. For example, network **102** can be comprised of at least one of the Internet, an intranet, a local area network (LAN), a metropolitan area network (MAN), or a wide area network (WAN). **Figure 1** is intended as an example, and not as an architectural limitation for the different illustrative embodiments.

As another example, design generator **130** can be located in client computer **112.** In yet another illustrative example, design generator **130** can be distributed between server computer **104** and different client devices in client devices **110.** For example, processing can be performed at server computer **104** and graphical user interfaces can be located at client devices **110.**

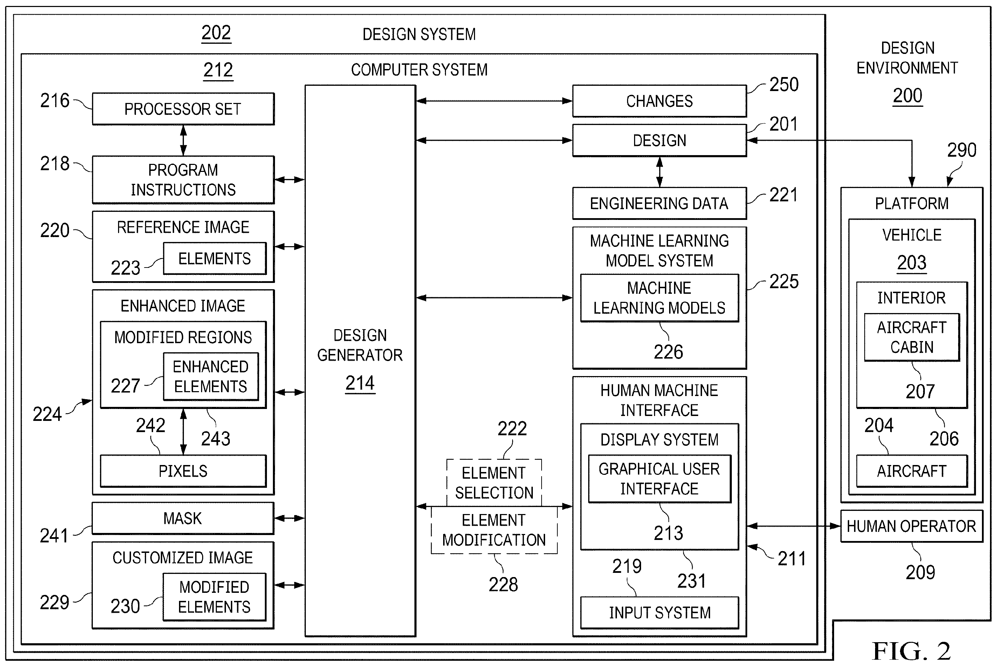

With reference now to **Figure 2****,** an illustration of a block diagram of a design environment is depicted in accordance with an illustrative embodiment. In this illustrative example, design system **202** in design environment **200** includes components that can be implemented in hardware such as the hardware shown in network data processing system **100** in **Figure 1****.** This interior design system operates to at least one of create or modify design **201** for platform **290.** For example, design **201** can be for interior **206** of platform **290** in the form of vehicle **203.**

Design **201** is a model of interior **206** in electronic form. This model can be, for example, a computer-aided design model, a point cloud model, a finite element analysis model, a two dimensional model, or other suitable model.

Interior design **132** can be associated with engineering data **221.** This engineering data provides tolerances for design **201.** In this example, engineering data **221** can include at least one of a number of tolerances for at least one of a physics based parameter, a volume, a material, a dimension, a density, an elasticity, a rigidness, a surface texture, a temperature based material behavior, a size, a location, an orientation, a weight, or other types of engineering data.

The tolerances in engineering data **221** can be constraints for one or more values or a range or ranges of values for modifications that can be made to design **201.** In addition to tolerances, engineering data **221** can also include other information such as descriptions, vendor identifications, and other information regarding various elements in design **201.**

For example, dimensions for overhead bins can have ranges of values for width, length, and other dimensions based on the particular aircraft in which the overhead bins are located. In some cases, the dimension can be a particular value rather than a range with respect to the tolerances for the overhead bins.

As another example, temperature based material behavior can be a color change based on temperature and can be imputed as a variable, this material can be used by design generator **214** to provide visualizations based on different environment temperatures.

Vehicle **203** can take a number of forms. For example, vehicle **203** can be selected from a group comprising aircraft **204,** a commercial airplane, a cargo airplane, a rotorcraft, a tilt-rotor aircraft, a tilt wing aircraft, a vertical takeoff and landing aircraft, an unmanned aerial vehicle, an artificial intelligence controlled vehicle, an electric vertical takeoff and landing vehicle, a personal air vehicle, a surface ship, a cruise ship, a tank, a personnel carrier, a train, a spacecraft, a crewed spacecraft, a space plane, a submarine, a bus, an automobile and other vehicles in which interiors are present.

Interior **206** can be any interior area within vehicle **203.** For example, when vehicle **203** is aircraft **204,** interior **206** can be aircraft cabin **207.** Aircraft cabin **207** can be, for example, a passenger seating area, a flight attendant seating area, a crew rest area, a galley, a lavatory, or other areas. In still other illustrative examples, interior **206** can be the cockpit of aircraft **204.**

In this illustrative example, design system **202** comprises computer system **212** and design generator **214.** Design generator **214** is located in computer system **212.**

Design generator **214** can be implemented in software, hardware, firmware or a combination thereof. When software is used, the operations performed by design generator **214** can be implemented in program instructions configured to run on hardware, such as a processor unit. When firmware is used, the operations performed by design generator **214** can be implemented in program instructions and data and stored in persistent memory to run on a processor unit. When hardware is employed, the hardware can include circuits that operate to perform the operations in design generator **214.**

In the illustrative examples, the hardware can take a form selected from at least one of a circuit system, an integrated circuit, an application-specific integrated circuit (ASIC), a programmable logic device, or some other suitable type of hardware configured to perform a number of operations. With a programmable logic device, the device can be configured to perform the number of operations. The device can be reconfigured at a later time or can be permanently configured to perform the number of operations. Programmable logic devices include, for example, a programmable logic array, a programmable array logic, a field-programmable logic array, a field-programmable gate array, and other suitable hardware devices. Additionally, the processes can be implemented in organic components integrated with inorganic components and can be comprised entirely of organic components excluding a human being. For example, the processes can be implemented as circuits in organic semiconductors.

Computer system **212** is a physical hardware system and includes one or more data processing systems. When more than one data processing system is present in computer system **212,** those data processing systems are in communication with each other using a communications medium. The communications medium can be a network. The data processing systems can be selected from at least one of a computer, a server computer, a tablet computer, or some other suitable data processing system.

As depicted, computer system **212** includes a number of processor units **216** that are capable of executing program instructions **218** implementing processes in the illustrative examples. In other words, program instructions **218** are computer-readable program instructions.

As used herein, a processor unit in the number of processor units **216** is a hardware device and is comprised of hardware circuits such as those on an integrated circuit that respond to and process instructions and program code that operate a computer.

When the number of processor units **216** executes program instructions **218** for a process, the number of processor units **216** can be one or more processor units that are in the same computer or in different computers. In other words, the process can be distributed between processor units **216** on the same or different computers in computer system **212.**

Further, the number of processor units **216** can be of the same type or different types of processor units. For example, the number of processor units **216** can be selected from at least one of a single core processor, a dual-core processor, a multi-processor core, a general-purpose central processing unit (CPU), a graphics processing unit (GPU), a digital signal processor (DSP), or some other type of processor unit.

In this illustrative example, human operator **209** can interact with design generator **214** through human machine interface **211** in computer system **212.** In this illustrative example, human machine interface (HMI) **211** is an interface system that can be used by human operator **209** to interact with different components in computer system **212.** As depicted, human machine interface **211** comprises display system **231** and input system **219.**

Display system **231** is a physical hardware system and includes one or more display devices on which graphical user interface **213** can be displayed. The display devices can include at least one of a light emitting diode (LED) display, an organic light emitting diode (OLED) display, a computer monitor, a projector, a flat panel display, a heads-up display (HUD), a head-mounted display (HMD), smart glasses, augmented reality glasses, or some other suitable device that can output information for the visual presentation of information.

Human operator **209** is a person that can interact with graphical user interface **213** through user input generated by input system **219** for design generator **214.** Input system **219** is a physical hardware system and can be selected from at least one of a mouse, a keyboard, a touch pad, a trackball, a touchscreen, a stylus, a motion sensing input device, a gesture detection device, a data glove, a cyber glove, a haptic feedback device, or some other suitable type of input device.

In one illustrative example, design generator **214** performs a number of different operations to make changes to design **201** for interior **206** of vehicle **203.** For example, design generator **214** identifies reference image **220** of design **201** of interior **206** of vehicle **203.** When vehicle **203** is aircraft **204,** interior **206** can be aircraft cabin **207** or some other interior portion of aircraft **204.**

The identification of reference image **220** can be made from a database of images, design **201,** or other source. For example, an image or interior **206** in design **201** can be selected from a database of images for use. In another example, reference image **220** can be generated from design **201** in the form of a computer-aided design model.

This reference image can be for a portion of the interior design such as a portion of a passenger area in interior **206** in aircraft **204.** In another example, reference image **220** can be for different portions of the design such as a galley in aircraft cabin **207.**

Design generator **214** identifies engineering data **221** for the interior design. Engineering data **221** can be located within design **201,** referenced by design **201,** or associated with design **201** in some other manner.

Further, design generator **214** receives an element selection **222** of a number of elements **223** in the reference image **220** of design **201** for modification.

The number of elements **223** can take a number of different forms. For example, when the vehicle is aircraft **204,** the number of elements **223** can be selected from at least one of a passenger seat, an overhead bin, a number of aisles, a seat cushion, a door, a light, a lighting system, an inflight entertainment system, a number of rows of passenger seats, a seat formation, or other elements within interior **206** of aircraft **204.**

In this example, element selection **222** can be received from human machine interface **211** based on input generated by human operator **209.** In this illustrative example, element selection **222** can be selected from at least one of text, voice, a touch gesture, or other types of input generated by human operator **209** using input system **219.** For example, human operator **209** may enter text using the keyboard. As another example, human operator **209** may speak to cause input system **219** to generate a voice that is element selection **222.** In yet another illustrative example, human operator **209** can use a touch gesture on a touchscreen to generate element selection **222** such as a bounding box around the number of elements **223.** This and other types of input can be generated by human operator **209.**

In this illustrative example, design generator **214** generates enhanced image **224** of design **201** using the number of elements **223** in reference image **220,** element selection **222,** and machine learning model system **225.** The number of elements **223** in enhanced image **224** are a number of enhanced elements **227.** This enhanced image can also be referred to as a masked image.

In this example, machine learning model system **225** is a number of machine learning models **226.** Different operations for design generator **214** can be performed using one or more of machine learning models **226.** One operation can be performed by a single machine learning model while two or more operations can be performed by another machine learning model.

For example, design generator **214** can generate enhanced image **224** by performing operations using one or more of machine learning models **226** in machine learning model system **225.** Design generator **214** uses machine learning model system **225** to identify the number of elements **223** in reference image **220** using element selection **222** and machine learning model system **225.** Design generator **214** uses machine learning model system **225** to create mask **241** that identifies pixels **242** representing the number of elements **223** identified in reference image **220** using element selection **222.**

Further, design generator **214** uses machine learning model system **225** to change pixels **242** representing the number of elements **223** to create a number of modified regions for the number of elements **223** to form enhanced image **224** with the number of enhanced elements **227.** The number of enhanced elements **227** in number of modified regions **243** is visually distinguished from other elements outside of the number of modified regions **243** in enhanced image **224.**

In this example. mask **241** is comprised of pixels that identify which pixels are part of the number of elements **223** in which pixels are not a part of the number of elements **223.** Mask **241** can be generated using a computer vision algorithm or a machine learning model such as U-Net, Mark R-CNN, or a Zero Shot Segmentation model in machine learning model system **225.**

Design generator **214** can perform an operation such as displaying enhanced image **224** with the number of enhanced elements **227** being graphically emphasized on the display system **231.** In this illustrative example, enhanced elements **227** can be graphically enhanced using a number of different types of graphical indicators that draw attention to the number of enhanced elements **227.** These enhanced elements can be identified using at least one of a color, a highlighting, a brightness, a boundary, a pattern change, an animation or other graphical indicator

Design generator **214** can receive element modification **228** for modifying the number of enhanced elements **227** in enhanced image **224.** In this example, the selection can be made by human operator **209** using human machine interface **211.** This input can take forms similar to those used to generate element selection **222.**

Design generator **214** modifies the number of enhanced elements **227** using element modification **228** that takes into account engineering data **221** using machine learning model system **225** to form customized image **229** of design **201** with a number of modified elements **230** in place of the number of enhanced elements **227.**

In modifying the number of enhanced elements **227,** design generator **214** uses machine learning model system **225** to identify a set of changes **250** to the number of enhanced elements **227** using element modification **228** that takes into account engineering data **221.** Design generator **214** uses machine learning model system **225** to perform a diffusion from noise to the customized image **229** using the set of changes **250** identified to generate customized image **229** with the set of changes **250** to the number of enhanced elements **227** to form the number of modified elements **230** in customized image **229.**

As used herein, a "set of" when used with reference items means one or more items. For example, a set of changes **250** is one or more of changes **250.**

In this example, the set of changes **250** to the set of enhanced elements **227** can take a number of different forms. For example, the set of changes to the number of elements is selected from at least one of a color, a material, a dimension, a shape, a position, a location , an orientation, a surface finish, or a coating.

For performing diffusion, machine learning model system **225** includes a number of machine learning models **226** in the form of diffusion models that can perform diffusion. A diffusion model generates images by iteratively transforming random noise into a coherent image through a denoising process. The model can also learn to reverse the diffusion process by adding Gaussian noise to an image in multiple steps until the image is comprised of noise. During training, the model learns to predict and remove this noise at each step, effectively recovering the original image from noisy versions. For image generation, the process is reversed in which the training starts from pure noise. The diffusion model applies the learned denoising steps iteratively, refining the noise into an image.

In these examples, dual diffusion can be used in which two diffusion models are simultaneously trained to learn to diffuse images from images to noise and noise to images and apply that for domain style adaptation.

The number of diffusion models can take a number of forms. For example, the number diffusion models can be selected from at least one of a Denoising Diffusion Probabilistic Model (DDPMs), a Score Based Generative Model (SDEs), a Forward Diffusion model, a Reverse Diffusion model, or other suitable model.

Further in this example, design generator **214** displays customized image **229** on display system **231.** Further, human operator **209** can determine whether to accept the number of modified elements **230** shown in customized image **229.** In response to accepting or approving these modifications, design generator **214** can propagate or make changes to design **201** to include modified elements **230** shown in customized image **229.**

With the changes to design **201,** a practical application of the results created by design generator **214** includes manufacturing a new aircraft using design **201** for customized image **229.** As another example, a practical application can involve reconfiguring an existing aircraft using design **201** for customized image **229.** In these examples, design **201** for customized image 229 means that design **201** includes a number of modified elements **230** shown in customized image **229.** For example, if a modified element is to change the size of a display in a passenger cabin, design 201 is also changed to reflect the change in size. Thus, design **201** MD modified to accurately reflect the number modified elements and customized image **229.**

In one illustrative example, one or more technical solutions are present that overcome a technical problem with revising designs such as those for passenger cabins and aircraft. As a result, one or more technical solutions may provide a technical effect enabling automatic generation of customized images that provide visualizations of the modifications. These modifications are technically accurate because they take into account engineering data for the design. As a result, approval of the modification in a customized image can be implemented for actual production.

In the illustrative example, the use of design generator **214** in computer system **212** integrates processes into a practical application for a method for generating design modifications that can be used to manufacture or reconfigure platforms such as aircraft. For example, design generator **214** in computer system **212** provides a practical application using a change generated for interior design of a vehicle to manufacture the vehicle using the interior design or to reconfigure the vehicle using the interior design.

In one illustrative example, a method, apparatus, system, computer program product can generate a change to the design of an aircraft cabin. This change can be used in manufacturing the aircraft cabin for an aircraft. Further, this change in the design can also be used to perform reconfiguration, upgrade, or other maintenance to existing aircraft. The modifications can be made to other vehicles in addition to aircraft **204.** Thus, the illustrative examples can be used to perform operations to manufacture or reconfigure the interior of a vehicle.

The illustration of design environment **200** in **Figure 2** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

As another example, when vehicle **203** takes the form of a surface ship such as a cruise ship, interior **206** can be any interior portion of the cruise ship. For example, the interior can be a dining area, a passenger room, a workout room, a kitchen, a hallway, a theater, or other interior portion of the cruise ship. In yet another illustrative example, design **201** can be for other portions of vehicle **203** in addition to interior **206.** For example, design **201** can be for physical structures in addition to those in interior **206** of vehicle **203** such as an exterior surface, a system, a structure within a wall, a wiring harness location within a fuselage, a control surface, and designs for other structures. Thus, design **201** can be of an interior, a physical structure, an exterior, or other designs for platform **290.**

In another illustrative example, element modification **228** can be made by another human operator in addition to human operator **209** operating a different human machine interface from human machine interface **211.**

In yet other illustrative examples, platform **290** can take other forms in addition to vehicle **203.** For example, in addition to vehicle **203,** platform **290** can also be a mobile platform, a stationary platform, a land-based structure, an aquatic-based structure, and a space-based structure, a power plant, a bridge, a dam, a house, a manufacturing facility, and a building.

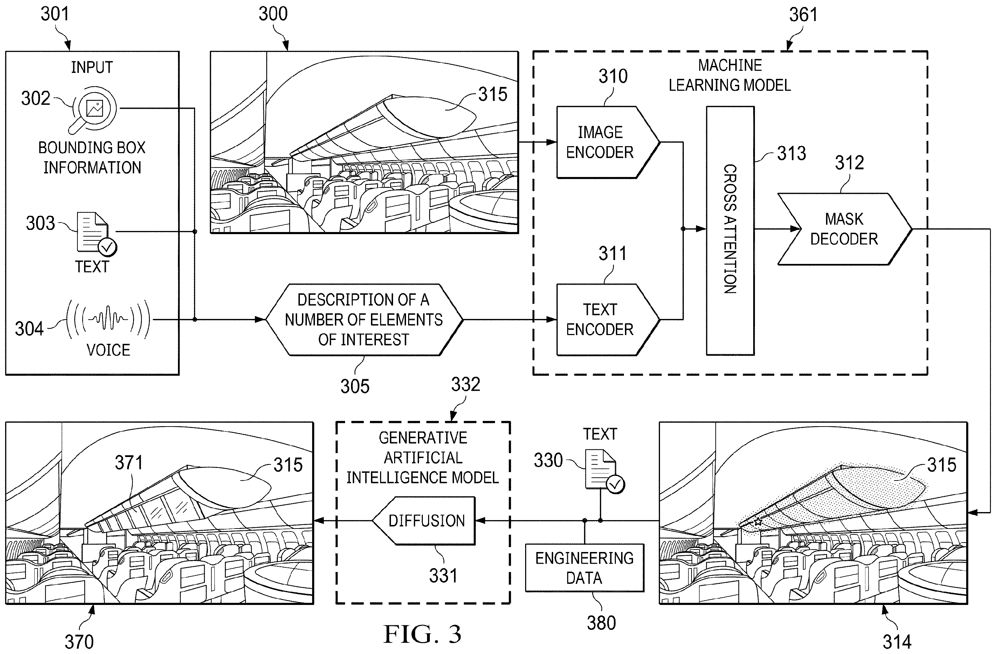

With reference next to **Figure 3****,** an illustration of a process flow diagram for changing visualization of an interior design is depicted in accordance with an illustrative embodiment. The process flow in this illustrative example can be implemented in design system **202** using design generator **214** in **Figure 2****.**

In this example, reference image **300** is an image for the interior design of a passenger cabin that is to be changed. Reference image **300** can be located in an image database for the interior design, generated from the interior design, or from some other source. For example, the interior design can be a computer-aided design (CAD) model of the interior of an aircraft. An image can be generated from this computer-aided design model.

This image can be viewed by a human operator on a display system. The human operator can then generate input **301** to specify what parts of reference image **300** are to be changed. These parts can be a number of elements within reference image **300.** This number of elements can be, for example, selected from a group comprising overhead bins, passenger seats, in-flight entertainment centers, an aisle, and other elements.

These number of elements in reference image **300** can be of the same type or different types. For example, the number of elements can include overhead bins and passenger seats while in other examples, the number of elements can be overhead bins. In yet another illustrative example, the number of elements can be just a single overhead bin in the overhead bins.

In this illustrative example, input **301** can be generated by a human operator through a human machine interface to select one or more elements to change in reference image **300.** Input **301** can take a number of different forms. For example, input **301** can be at least one of bounding box information **302,** text **303,** or voice **304.**

Bounding box information **302** can be generated in a number of different ways. For example, bounding box information **302** can be generated using a touch gesture to draw the bounding box around elements to be changed in reference image **300.** For example, bounding box information **302** can be information about where the specific elements are located in reference image **300.** This bounding box information can include a center of the bounding box and the width and height of the bounding box that surrounds one or more elements in reference image **300.**

In this example, text **303** can be a textual description of elements to be changed in reference image **300.** For example, text **303** describes the number of elements to be changed. For example, text **303** can be at least one of overhead bins, passenger seats, aisles, or some other text to identify elements for change.

Voice **304** is audio information describing the number of elements to be changed. Voice **304** can be the same description as text **303** but in an audio form.

These inputs form description of a number of elements of interest **305** that is used to identify those elements in reference image **300.** Description of a number of elements of interest **305** can be an example of element selection **222** in **Figure 2****.** In this example, the elements of interest are overhead bins **315** in reference image **300.**

In the illustrative example, reference image **300** and description of a number of elements of interest **305** are inputs into machine learning model **361.** This machine learning model can be a fully generative artificial intelligence model. Image encoder **310** in machine learning model **361** receives reference image **300** and outputs a numerical representation of reference image **300** that can be used by a machine learning model. Text encoder **311** in machine learning model **361** receives description of a number of elements of interest **305** and outputs a numerical representation of this description that can be used by a machine learning model.

Mask decoder **312** in machine learning model **361** receives description of a number of elements of interest **305** and outputs a numerical representation of this description by a machine learning model. The outputs of these two encoders are aligned in common latent space using cross attention **313** in machine learning model **361.**

These outputs are received by mask decoder **312** in machine learning model **361.** Mask decoder **312** identifies and highlights overhead bins **315** to generate enhanced image **314.** This mechanism for identifying overhead bins **315** can be a segmentation mask, a bounding box prediction, or a heat map mechanism. Mask decoder **312** outputs enhanced image **314** in which overhead bins **315** in enhanced image **314** are highlighted or otherwise graphically identified.

Next, enhanced image **314** and text **330** are inputs for diffusion **331** in generative artificial intelligence model **332.** In this example, diffusion **331** can include generating an image with noise from enhanced image **314** and forming the noise to generate customized image **370.** In creating an image with noise, noise can be gradually added to enhanced image **314** over multiple steps, transforming this image into a noisy version. During training, generative artificial intelligence model **332** learns how data behaves as it becomes increasingly noisy.

In performing denoising, generative artificial intelligence model **332** is trained to reverse the noising process. In this example, diffusion **331** in generative artificial intelligence model **332** starts from a noisy input. Diffusion **331** iteratively removes the noise, reconstructing the data step by step to form an image. This denoising in diffusion **331** in generative artificial intelligence model **332** can be performed through successive steps using text **330** and engineering data **380** to generate customized image **370.**

In this example, text **330** identifies an element modification for overhead bins **315.** For example, text **330** can be "aircraft cabin with integrated large-screen" that is used to modify overhead bins **315** from enhanced image **314.** In this example, diffusion **331** is performed using enhanced image **314** and text **330** to generate customized image **370** which now has integrated screens **371** in place of overheard bins **315.**

Diffusion **331** performed on enhanced image **314** to generate customized image **370** with integrated screens **371** is performed subject to engineering data **380** which is also input into generative artificial intelligence model **332** to perform diffusion **331.** Engineering data used to provide constraints for modifications to overhead bins **315.** For example, engineering data **380** can define the maximum size for integrated screens **371.**

In these examples, diffusion **331** for generative artificial intelligence model **332** can be implemented in a number of different types of models. For example, without limitation, generative artificial intelligence model **332** can be selected from a group comprising a diffusion model, a latent diffusion model, a DALL-E 2 model, a denoising diffusion probabilistic model, a style domain adaptation model, a style transfer model, a generative adversarial network, an auto-encoder, a Gaussian Splatting model, a NeRF model, or a trilinear point splatting model.

Further, generative artificial intelligence models can be fully generative artificial intelligence models. This type of artificial intelligence model can autonomously generate new data such as images without requiring detail input or conditions covering all aspects of the image generation. In these examples, the image generation can include modification of elements in a current image.

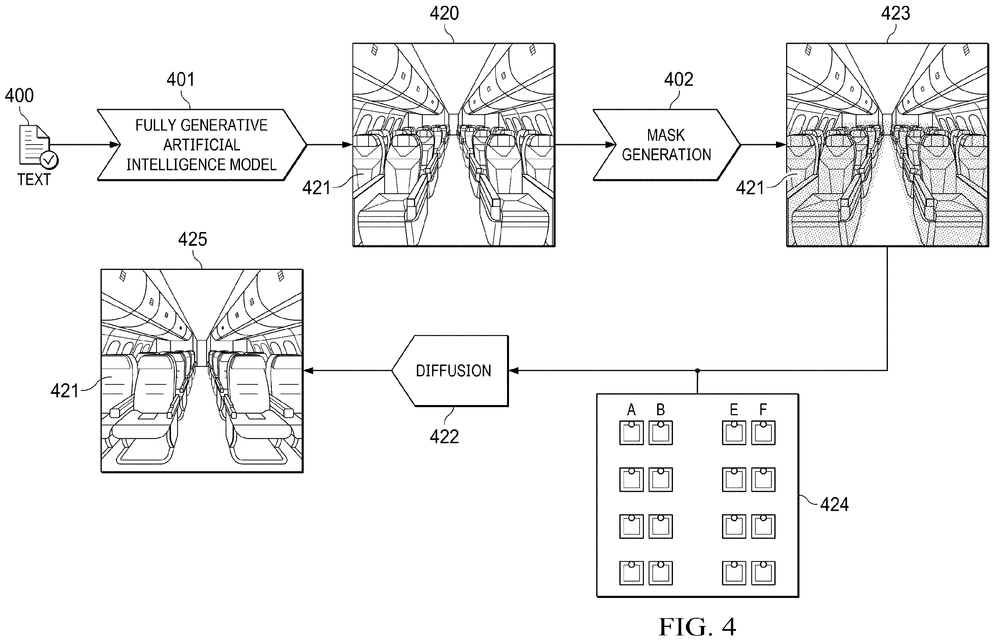

Turning now to **Figure 4****,** an illustration of a process flow diagram for changing visualization of an interior design is depicted in accordance with an illustrative embodiment. The process flow in this illustrative example can be implemented in design system **202** using design generator **214** in **Figure 2****.**

In this example, text **400** is an input into fully generative artificial intelligence model **401.** In this example, this model generates an image of an interior design for modification. For example, fully generative artificial intelligence model **401** can generate reference image **300** in **Figure 3** for modification. This image can be generated using an interior design in the form of a computer-aided design. For example, the computer-aided design model is an aircraft. Text **400** is "modify passenger seats for aircraft order number xxx to have a carbon fiber appearance." In this example, with text **400,** fully generative artificial intelligence model **401** generates reference image **420** of passenger seats **421** using the computer-aided design model for the aircraft that is to be manufactured for aircraft order number xxx.

Mask generation **402** generates enhanced image **423** of passenger seats **421** in which these passenger seats are highlighted. In this example, mass generation can be formed using machine learning model **361** in **Figure 3****.** In this example, text **400** also includes the element selection selecting the passenger seats for modification.

Next, diffusion **422** is performed to modify the passenger seats from enhanced image **423.** In this example, the modification is also identified from text **400.** This modification is subject to engineering data in the form of two-dimensional layout **424.** In this example, enhanced image **423,** two-dimensional layout **424,** and text **400** are inputs to diffusion **422.**

Diffusion **422** generates customized image **425** with passenger seats **421** that have a carbon fiber appearance. Two-dimensional layout **424** is used by the denoising process in diffusion **422** to ensure that passenger seats **421** in customized image **425** follow the layout of passenger seats in two-dimensional layout **424.**

Thus, in this example, text **400** is a single input that selects the reference image, identifies elements to be modified, and identifies the modification to be made.

The illustration of the process flows in **Figures 3-4** are example implementations of process flows that can be implemented by design generator **130** in **Figure 1** and design generator **214** in **Figure 2** to modify interior designs and are not meant to limit the manner in which other examples can be implemented. For example, in other illustrative examples, interiors of other types of vehicles other than aircraft can be modified.

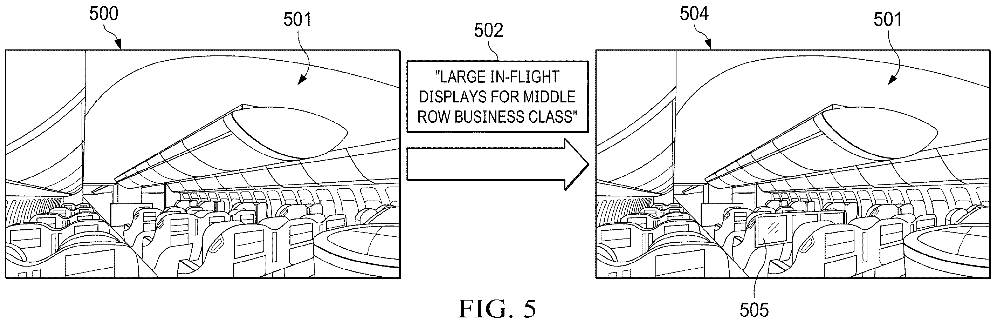

**Figures 5-7** are illustrations of process flows to generate customized images that can be generated for vehicles and other platform designs. The modifications shown in these images can be made to interior designs for aircraft in response to the generation of the customized image and approval of the modification in the customized image.

With reference to **Figure 5****,** an illustration of a process flow for customizing an interior of a passenger cabin is depicted in accordance with an illustrative embodiment. The process flow in this example can be implemented using design system **202** in **Figure 2****.**

In this example, reference image **500** is a reference image of passenger cabin **501.** In this example, input **502** is both an element selection that selects elements for modification and an element modification that describes the design for passenger cabin **501.**

In this example, input **502** is "large in-flight displays for middle row business class" and can take a number of different forms. For example, input **502** can be at least one of text or voice in this example. This input both selects the elements for modification as well as the modification to be made.

Customized image **504** of passenger cabin **501** is generated. In this example, large in-flight displays **505** have been added to passenger cabin **501** in customized image **504.**

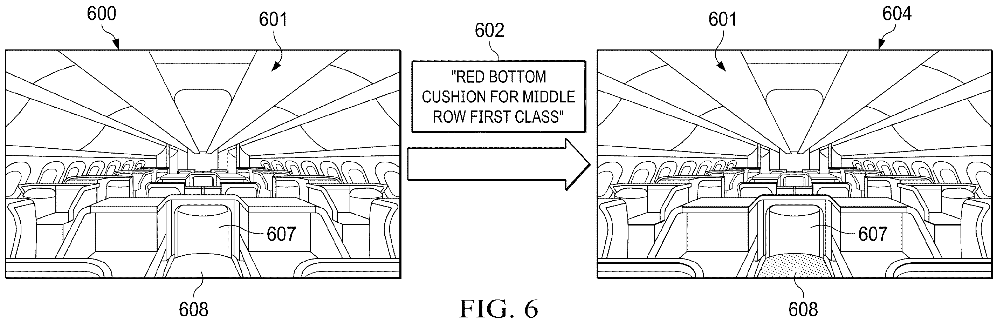

Turning to **Figure 6****,** an illustration of a process flow for customizing an interior of a passenger cabin is depicted in accordance with an illustrative embodiment. The process flow in this example can be implemented using design system **202** in **Figure 2****.**

In this example, reference image **600** is a reference image of passenger cabin **601.** In this example, input **602** is both an element selection that selects elements for modification and an element modification that describes the design for passenger cabin **601.**

In this example, input **602** is both an element selection that selects an element for modification and an element modification that describes the change to the design for passenger cabin **601.** As depicted, input **602** is "red bottom cushion for middle row first class" and this input can take a number of different forms. For example, input **602** can be at least one of text or voice in this example. The elements selected for the change by input **602** is bottom cushion **608** for passenger seat **607.**

Customized image **604** of passenger cabin **601** is generated in response to input **602.** In this example, red bottom cushion **605** has been added to passenger seat **607** in passenger cabin **601** in customized image **604.**

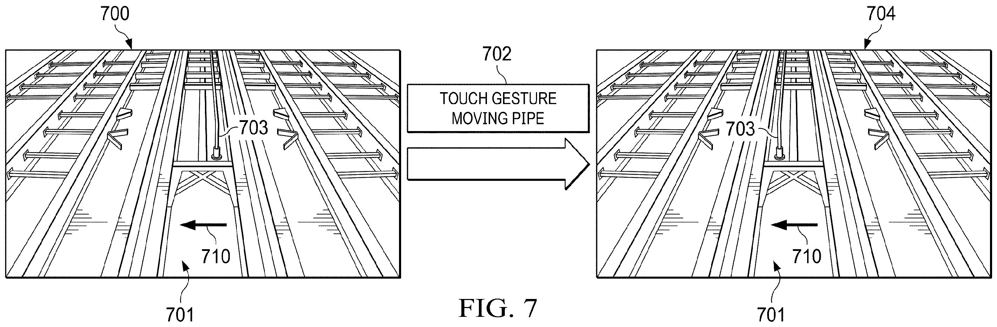

Next in **Figure 7****,** an illustration of a process flow for customizing an aircraft structure is depicted in accordance with an illustrative embodiment. The process flow in this example can be implemented using design system **202** in **Figure 2****.**

As depicted, reference image **700** is an image of aircraft structure **701.** In this example, input **702** selects an element for modification and the modification to the design for aircraft structure **701.** In this example, input **702** is "touch gesture moving pipe" in the direction of arrow **710.**

In response to input **702,** customized image **704** is generated for aircraft structure **701.** As depicted in customized image **704,** pipe **703** has been moved in the direction of arrow **710** in customized image **704.** In this manner, a design engineer can see how aircraft structure **701** will look with the movement of pipe **703.**

The illustration of the process flows in **Figures 6-****7,** provided as examples, are not meant to limit the manner in which other illustrative examples can be implemented. For example, these process flows can be applied to interiors for other vehicles such as a train or bus. Additionally, the process flows can be applied to different platforms in addition to vehicles such as a bridge, a manufacturing facility, an auditorium, or other platform.

The different customized images generated in **Figures 5-7** have modifications from reference images that can be applied to the design for a particular platform. The application of these modifications can be made in response to generating the customized image or in response to an approval of the modification in the customized image. In this manner, a design such as a computer-aided design file can be modified using this process flow. Further, the modified design can then be implemented in manufacturing or reconfiguring an existing platform.

These different examples generate customized images based on the design and take into account engineering data. For example, although not shown, the modifications made for the inputs are made taking into account the engineering data for the design.

Engineering data can provide constraints on modifications that are made. For example, the color of the bottom seat may be subject to materials or allowed colors for a particular customer. As another example, the size of in-flight displays can be limited by the amount of space specified in the design specifications of a particular class in a passenger cabin.

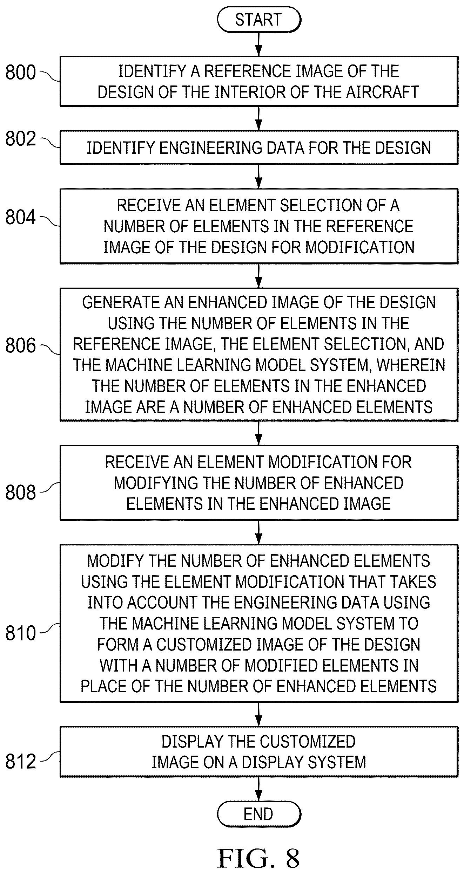

With reference next to **Figure 8****,** an illustration of a flowchart of a process for generating a change to a design of an interior of an aircraft is depicted in accordance with an illustrative embodiment. The process in **Figure 8** can be implemented in hardware, software, or both. When implemented in software, the process can take the form of program instructions that are run by one of more processor units located in one or more hardware devices in one or more computer systems. For example, the process can be implemented in design generator **130** in server computer **104** in **Figure 1** and design generator **214** in computer system **212** in **Figure 2****.**

The process identifies a reference image of the design of the interior of the aircraft (operation **800**). The process identifies engineering data for the design (operation **802**).

The process receives an element selection of a number of elements in the reference image of the design for modification (operation **804**). The process generates an enhanced image of the design using the number of elements in the reference image, the element selection, and the machine learning model system, wherein the number of elements in the enhanced image are a number of enhanced elements(operation **806**).

The process receives an element modification for modifying the number of enhanced elements in the enhanced image (operation **808**). The process modifies the number of enhanced elements using the element modification that takes into account the engineering data using the machine learning model system to form a customized image of the design with a number of modified elements in place of the number of enhanced elements (operation **810**).

The process displays the customized image on a display system (operation **812**). The process terminates thereafter.

In this flowchart, the machine learning model system comprises a first generative artificial intelligence model trained to generate the enhanced image. This machine learning model system also comprises a second generative artificial intelligence model trained to generate the customized image. The second generative artificial intelligence model can be selected from a group comprising a diffusion model, a latent diffusion model, a DALL-E 2 model, a denoising diffusion probabilistic model, and other suitable types of machine learning models that can perform diffusion.

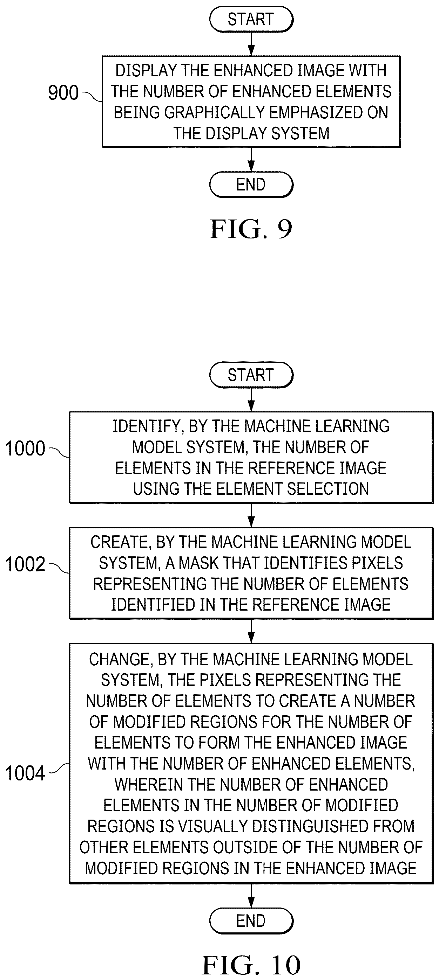

Next in **Figure 9****,** an illustration of a flowchart of a process for displaying an enhanced image is depicted in accordance with an illustrative embodiment. The operation in this flowchart is an example of an additional operation that can be performed with the operations in **Figure 8****.**

The process displays the enhanced image with the number of enhanced elements being graphically emphasized on the display system (operation **900**). The process terminates thereafter.

With reference now to **Figure 10****,** an illustration of a flowchart of a process for generating an enhanced image is depicted in accordance with an illustrative embodiment. The process in this flowchart is an example of an implementation for operation 8**06** in **Figure 8****.** In this flowchart, the different operations can be performed using machine learning model system **150** in **Figure 1** and machine learning model system **225** in **Figure 2****.**

The process begins by identifying, by the machine learning model system, the number of elements in the reference image using the element selection (operation **1000**). The process creates, by the machine learning model system, a mask that identifies pixels representing the number of elements identified in the reference image (operation **1002**).

The process changes, by the machine learning model system, the pixels representing the number of elements to create a number of modified regions for the number of elements to form the enhanced image with the number of enhanced elements, wherein the number of enhanced elements in the number of modified regions is visually distinguished from other elements outside of the number of modified regions in the enhanced image (operation **1004**). The process terminates thereafter.

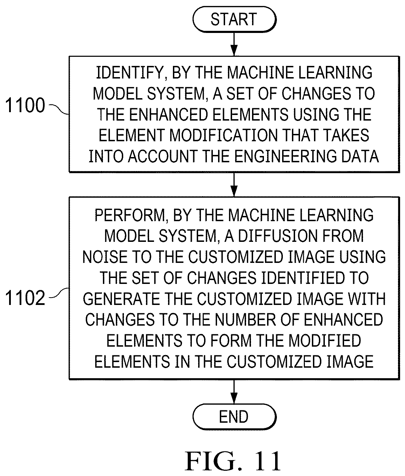

Turning to **Figure 11****,** an illustration of a flowchart of a process for modifying a number of enhanced elements is depicted in accordance with an illustrative embodiment. The operations in this flowchart are an example of an implementation for operation **810** in **Figure 8****.** These operations can be implemented using machine learning model system **150** in **Figure 1** and machine learning model system **225** in **Figure 2****.**

The process identifies, by the machine learning model system, a set of changes to the enhanced elements using the element modification that takes into account the engineering data (operation **1100**). The process performs, by the machine learning model system, a diffusion from noise to the customized image using the set of changes identified to generate the customized image with changes to the number of enhanced elements to form the modified elements in the customized image (operation **1102**). The process terminates thereafter.

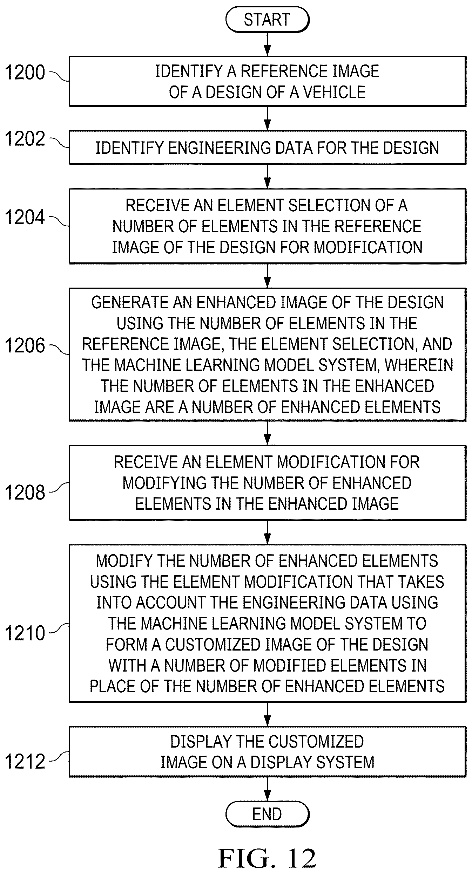

Turning next to **Figure 12****,** an illustration of a flowchart of a process for generating a change to a design of a vehicle is depicted in accordance with an illustrative embodiment. The process in **Figure 12** can be implemented in hardware, software, or both. When implemented in software, the process can take the form of program instructions that are run by one of more processor units located in one or more hardware devices in one or more computer systems. For example, the process can be implemented in design generator **130** in server computer **104** in **Figure 1** and design generator **214** in computer system **212** in **Figure 2****.**

The process begins by identifying a reference image of a design of a vehicle (operation **1200**). The process identifies engineering data for the design (operation **1202**).

The process receives an element selection of a number of elements in the reference image of the design for modification (operation **1204**). The process generates an enhanced image of the design using the number of elements in the reference image, the element selection, and the machine learning model system, wherein the number of elements in the enhanced image are a number of enhanced elements (operation **1206**).

The process receives an element modification for modifying the number of enhanced elements in the enhanced image (operation **1208**). The process modifies the number of enhanced elements using the element modification that takes into account the engineering data using the machine learning model system to form a customized image of the design with a number of modified elements in place of the number of enhanced elements (operation **1210**).

The process displays the customized image on a display system (operation **1212**). The process terminates thereafter.

The flowcharts and block diagrams in the different depicted embodiments illustrate the architecture, functionality, and operation of some possible implementations of apparatuses and methods in an illustrative embodiment. In this regard, each block in the flowcharts or block diagrams can represent at least one of a module, a segment, a function, or a portion of an operation or step. For example, one or more of the blocks can be implemented as program instructions, hardware, or a combination of the program instructions and hardware. When implemented in hardware, the hardware can, for example, take the form of integrated circuits that are manufactured or configured to perform one or more operations in the flowcharts or block diagrams. When implemented as a combination of program instructions and hardware, the implementation may take the form of firmware. Each block in the flowcharts or the block diagrams can be implemented using special purpose hardware systems that perform the different operations or combinations of special purpose hardware and program instructions run by the special purpose hardware.

In some alternative implementations of an illustrative embodiment, the function or functions noted in the blocks may occur out of the order noted in the figures. For example, in some cases, two blocks shown in succession may be performed substantially concurrently, or the blocks may sometimes be performed in the reverse order, depending upon the functionality involved. Also, other blocks may be added in addition to the illustrated blocks in a flowchart or block diagram.

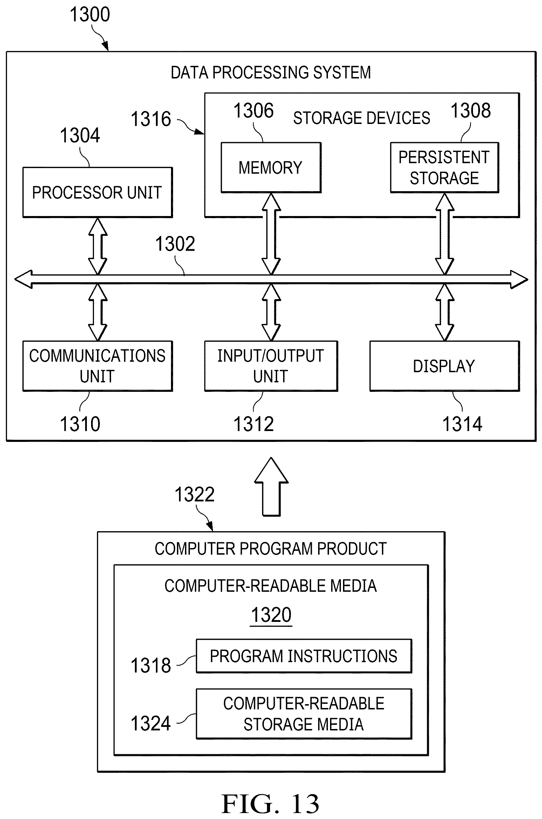

Turning now to **Figure 13****,** an illustration of a block diagram of a data processing system is depicted in accordance with an illustrative embodiment. Data processing system **1300** can be used to implement server computer **104,** server computer **106,** client devices **110,** in **Figure 1****.** Data processing system **1300** can also be used to implement computer system **212** in **Figure 2****.** In this illustrative example, data processing system **1300** includes communications framework **1302,** which provides communications between processor unit **1304,** memory **1306,** persistent storage **1308,** communications unit **1310,** input/output (I/O) unit **1312,** and display **1314.** In this example, communications framework **1302** takes the form of a bus system.

Processor unit **1304** serves to execute instructions for software that can be loaded into memory **1306.** Processor unit **1304** includes one or more processors. For example, processor unit **1304** can be selected from at least one of a multicore processor, a central processing unit (CPU), a graphics processing unit (GPU), a physics processing unit (PPU), a digital signal processor (DSP), a network processor, or some other suitable type of processor. Further, processor unit **1304** can be implemented using one or more heterogeneous processor systems in which a main processor is present with secondary processors on a single chip. As another illustrative example, processor unit **1304** can be a symmetric multi-processor system containing multiple processors of the same type on a single chip.

Memory **1306** and persistent storage **1308** are examples of storage devices **1316.** A storage device is any piece of hardware that is capable of storing information, such as, for example, without limitation, at least one of data, program instructions in functional form, or other suitable information either on a temporary basis, a permanent basis, or both on a temporary basis and a permanent basis. Storage devices **1316** may also be referred to as computer-readable storage devices in these illustrative examples. Memory **1306,** in these examples, can be, for example, a random-access memory or any other suitable volatile or non-volatile storage device. Persistent storage **1308** may take various forms, depending on the particular implementation.

For example, persistent storage **1308** may contain one or more components or devices. For example, persistent storage **1308** can be a hard drive, a solid-state drive (SSD), a flash memory, a rewritable optical disk, a rewritable magnetic tape, or some combination of the above. The media used by persistent storage **1308** also can be removable. For example, a removable hard drive can be used for persistent storage **1308.**

Communications unit **1310,** in these illustrative examples, provides for communications with other data processing systems or devices. In these illustrative examples, communications unit **1310** is a network interface card.

Input/output unit **1312** allows for input and output of data with other devices that can be connected to data processing system **1300.** For example, input/output unit **1312** may provide a connection for user input through at least one of a keyboard, a mouse, or some other suitable input device. Further, input/output unit **1312** may send output to a printer. Display **1314** provides a mechanism to display information to a user.

Instructions for at least one of the operating system, applications, or programs can be located in storage devices **1316,** which are in communication with processor unit **1304** through communications framework **1302.** The processes of the different embodiments can be performed by processor unit **1304** using computer-implemented instructions, which may be located in a memory, such as memory **1306.**

These instructions are referred to as program instructions, computer usable program instructions, or computer-readable program instructions that can be read and executed by a processor in processor unit **1304.** The program instructions in the different embodiments can be embodied on different physical or computer-readable storage media, such as memory **1306** or persistent storage **1308.**

Program instructions **1318** are located in a functional form on computer-readable media **1320** that is selectively removable and can be loaded onto or transferred to data processing system **1300** for execution by processor unit **1304.** Program instructions **1318** and computer-readable media **1320** form computer program product **1322** in these illustrative examples. In the illustrative example, computer-readable media **1320** is computer-readable storage media **1324.**

Computer-readable storage media **1324** is a physical or tangible storage device used to store program instructions **1318** rather than a medium that propagates or transmits program instructions **1318.** Computer-readable storage media **1324** may be at least one of an electronic storage medium, a magnetic storage medium, an optical storage medium, an electromagnetic storage medium, a semiconductor storage medium, a mechanical storage medium, or other physical storage medium. Some known types of storage devices that include these mediums include: a diskette, a hard disk, a random access memory (RAM), a read-only memory (ROM), an erasable programmable read-only memory (EPROM or Flash memory), a static random access memory (SRAM), a compact disc read-only memory (CD-ROM), a digital versatile disk (DVD), a memory stick, a floppy disk, a mechanically encoded device, such as punch cards or pits / lands formed in a major surface of a disc, or any suitable combination thereof.

Computer-readable storage media **1324,** as that term is used in the present disclosure, is not to be construed as storage in the form of transitory signals per se, such as at least one of radio waves or other freely propagating electromagnetic waves, electromagnetic waves propagating through a waveguide, light pulses passing through a fiber optic cable, electrical signals communicated through a wire, or other transmission media.

Further, data can be moved at some occasional points in time during normal operations of a storage device. These normal operations include access, de-fragmentation or garbage collection. However, these operations do not render the storage device as transitory because the data is not transitory while the data is stored in the storage device.

Alternatively, program instructions **1318** can be transferred to data processing system **1300** using a computer-readable signal media. The computer-readable signal media are signals and can be, for example, a propagated data signal containing program instructions **1318.** For example, the computer-readable signal media can be at least one of an electromagnetic signal, an optical signal, or any other suitable type of signal. These signals can be transmitted over connections, such as wireless connections, optical fiber cable, coaxial cable, a wire, or any other suitable type of connection.

Further, as used herein, "computer-readable media **1320"** can be singular or plural. For example, program instructions **1318** can be located in computer-readable media **1320** in the form of a single storage device or system. In another example, program instructions **1318** can be located in computer-readable media **1320** that is distributed in multiple data processing systems. In other words, some instructions in program instructions **1318** can be located in one data processing system while other instructions in program instructions **1318** can be located in one data processing system. For example, a portion of program instructions **1318** can be located in computer-readable media **1320** in a server computer while another portion of program instructions **1318** can be located in computer-readable media **1320** located in a set of client computers.

The different components illustrated for data processing system **1300** are not meant to provide architectural limitations to the manner in which different embodiments can be implemented. In some illustrative examples, one or more of the components may be incorporated in or otherwise form a portion of, another component. For example, memory **1306,** or portions thereof, may be incorporated in processor unit **1304** in some illustrative examples. The different illustrative embodiments can be implemented in a data processing system including components in addition to or in place of those illustrated for data processing system **1300.** Other components shown in **Figure 13** can be varied from the illustrative examples shown. The different embodiments can be implemented using any hardware device or system capable of running program instructions **1318.**

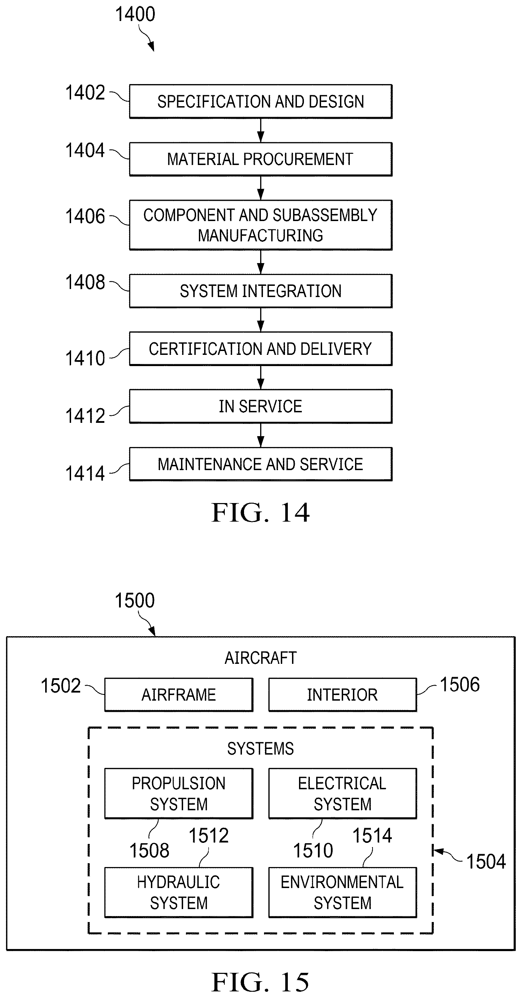

Illustrative embodiments of the disclosure may be described in the context of aircraft manufacturing and service method **1400** as shown in **Figure 14** and aircraft **1500** as shown in **Figure 15****.** Turning first to **Figure 14****,** an illustration of a block diagram of an aircraft manufacturing and service method is depicted in accordance with an illustrative embodiment. During pre-production, aircraft manufacturing and service method **1400** may include specification and design **1402** of aircraft **1500** in **Figure 15** and material procurement **1404.**

During production, component and subassembly manufacturing **1406** and system integration **1408** of aircraft **1500** in **Figure 15** takes place. Thereafter, aircraft **1500** in **Figure 15** can go through certification and delivery **1410** in order to be placed in service **1412.** While in service **1412** by a customer, aircraft **1500** in **Figure 15** is scheduled for routine maintenance and service **1414,** which may include modification, reconfiguration, refurbishment, and other maintenance or service.

Each of the processes of aircraft manufacturing and service method **1400** may be performed or carried out by a system integrator, a third party, an operator, or some combination thereof. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 15****,** an illustration of a block diagram of an aircraft is depicted in which an illustrative embodiment may be implemented. In this example, aircraft **1500** is produced by aircraft manufacturing and service method **1400** in **Figure 14** and may include airframe **1502** with plurality of systems **1504** and interior **1506.** Examples of systems **1504** include one or more of propulsion system **1508,** electrical system **1510,** hydraulic system **1512,** and environmental system **1514.** Any number of other systems may be included. Although an aerospace example is shown, different illustrative embodiments may be applied to other industries, such as the automotive industry.

Apparatuses and methods embodied herein may be employed during at least one of the stages of aircraft manufacturing and service method **1400** in **Figure 14****.**

In one illustrative example, components or subassemblies produced in component and subassembly manufacturing **1406** in **Figure 14** can be fabricated or manufactured in a manner similar to components or subassemblies produced while aircraft **1500** is in service **1412** in **Figure 14****.** As yet another example, one or more apparatus embodiments, method embodiments, or a combination thereof can be utilized during production stages, such as component and subassembly manufacturing **1406** and system integration **1408** in **Figure 14****.** One or more apparatus embodiments, method embodiments, or a combination thereof may be utilized while aircraft **1500** is in service **1412,** during maintenance and service **1414** in **Figure 14****,** or both. The use of a number of the different illustrative embodiments may substantially expedite the assembly of aircraft **1500,** reduce the cost of aircraft **1500,** or both expedite the assembly of aircraft **1500** and reduce the cost of aircraft **1500.**

The design generator in the different illustrative examples can be used in at least one of specification and design **1402** and maintenance and service **1414.** During specification and design **1402,** the design generator can be used to reduce the amount of time needed to make design changes or updates to aircraft **1500** that will be manufactured for a customer. Different changes to elements in the design of aircraft **1500** can be made in a manner that reduces or eliminates the need for design engineers and designers to make and verify that changes requested can be made. Further, design generator can be used to make changes to aircraft **1500** after it has been manufactured. These changes can be made for maintenance and service **1414** that includes include modification, reconfiguration, refurbishment, and other maintenance or service. For example, reconfiguration of passenger seats can be made more quickly. As another example, replacement seats of different designs including different colors, sizes, dimensions, and materials can be made.

Thus, illustrative examples provide a method, apparatus, system, and computer program product that enables modifying designs for interiors of aircraft presented to customers based on customer feedback. In these different illustrative examples, demand of time needed to collaborate between customers, design engineers, and three-dimensional artists to design and render interiors is produced using design systems such as design system **202** in **Figure 2****.**

In one illustrative example, an interior design system comprises a computer system; a generative artificial intelligence model system in the computer system; and a design generator in the computer system. The design generator is configured to identify a reference image of an interior design of an interior of a vehicle and identify engineering data for the interior design; and receive an element selection of a number of elements in the reference image of the interior design for modification. The design generator is configured to generate an enhanced image of the interior design using the number of elements in the reference image, the element selection, and the machine learning model system. The number of elements in the enhanced image are a number of enhanced elements. An element modification is received for modifying the number of enhanced elements in the enhanced image. The design generator is configured to modify the number of enhanced elements using the element modification that takes into account the engineering data using the machine learning model system to form a customized image of the interior design with a number of modified elements in place of the number of enhanced elements. The design generator is configured to display the customized image on a display system.

Further, the current disclosure comprises embodiments according to the following clauses:
Clause 1. A design system comprising:
   a computer system;
   a machine learning model system in the computer system; and
   a design generator in the computer system, wherein the design generator is configured to perform operations comprising:
      identifying a reference image of a design of an interior of an aircraft,
      identifying engineering data for the design;
      receiving an element selection of a number of elements in the reference image of the design for modification;
      generating an enhanced image of the design using the number of elements in the reference image, the element selection, and the machine learning model system, wherein the number of elements in the enhanced image are a number of enhanced elements;
      receiving an element modification for modifying the number of enhanced elements in the enhanced image;
      modifying the number of enhanced elements using the element modification that takes into account the engineering data using the machine learning model system to form a customized image of the design with a number of modified elements in place of the number of enhanced elements; and
      displaying the customized image on a display system.
Clause 2. The design system of clause 1, wherein the design generator is further configured to perform the operations comprising:
   displaying the enhanced image with the number of enhanced elements being graphically emphasized on the display system.
Clause 3. The design system of clause 1 or 2, wherein the machine learning model system comprises a first generative artificial intelligence model trained to generate the enhanced image and a second generative artificial intelligence model trained to generate the customized image.
Clause 4. The design system of clause 3, wherein the second generative artificial intelligence model is selected from a group comprising a diffusion model, a latent diffusion model, a DALL-E 2 model, a denoising diffusion probabilistic model, a style domain adaptation model, a style transfer model, a generative adversarial network, an auto-encoder, a Gaussian Splatting model, a NeRF model, or a trilinear point splatting model.
Clause 5. The design system of any one of clauses 1 to 4, wherein in generating the enhanced image, the design generator is configured to perform the operations comprising:
   identifying, by the machine learning model system, the number of elements in the reference image using the element selection;
   creating, by the machine learning model system, a mask that identifies pixels representing the number of elements identified in the reference image; and
   changing, by the machine learning model system, the pixels representing the number of elements to create a number of modified regions for the number of elements to form the enhanced image with the number of enhanced elements, wherein the number of enhanced elements in the number of modified regions is visually distinguished from other elements outside of the number of modified regions in the enhanced image.
Clause 6. The design system of any one of clauses 1 to 5, wherein in modifying the number of enhanced elements, the design generator is configured to perform the operations comprising:
   identifying, by the machine learning model system, a set of changes to the enhanced elements using the element modification that takes into account the engineering data; and
   performing, by the machine learning model system, a diffusion from noise to the customized image using the set of changes identified to generate the customized image with changes to the number of enhanced elements to form the modified elements in the customized image.
Clause 7. The design system of clause 6, wherein the set of changes to the number of enhanced elements is selected from at least one of a color, a material, a dimension, a shape, a position, a location , an orientation, a surface finish, or a coating.
Clause 8. The design system of any one of clauses 1 to 7, wherein the number of elements is selected from at least one of a passenger seat, an overhead bin, a number of aisles, a seat cushion, a door, a light, a lighting system, an inflight entertainment system, a number of rows of passenger seats, or a seat formation.
Clause 9. The design system of any one of clauses 1 to 8, wherein the element selection is selected from at least one of a text, a voice, or a touch gesture.
Clause 10. The design system of any one of clauses 1 to 9, wherein the number of enhanced elements are identified in the enhanced image using at least one of a color, a highlight, a brightness, a boundary, a pattern change, or an animation.
Clause 11. The design system of any one of clauses 1 to 10, wherein the engineering data defines a number of tolerances for at least one of a physics based parameter, a volume, a material, a dimension, a density, an elasticity, a rigidness, a surface texture, a temperature based material behavior, a size, a location, an orientation, or a weight.
Clause 12. The design system of any one of clauses 1 to 11, wherein a new aircraft is manufactured using the design for the customized image.
Clause 13. The design system of any one of clauses 1 to 12, wherein an existing aircraft is reconfigured using the design for the customized image.
Clause 14. A method for generating a change to a design of an interior of an aircraft, the method comprising:
   identifying a reference image of the design of the interior of an aircraft;
   identifying engineering data for the design;
   receiving an element selection of a number of elements in the reference image of the design for modification;
   generating an enhanced image of the design using the number of elements in the reference image, the element selection, and the machine learning model system, wherein the number of elements in the enhanced image are a number of enhanced elements;
   receiving an element modification for modifying the number of enhanced elements in the enhanced image;
   modifying the number of enhanced elements using the element modification that takes into account the engineering data using the machine learning model system to form a customized image of the design with a number of modified elements in place of the number of enhanced elements; and
   displaying the customized image on a display system.
Clause 15. The method of clause 14 further comprising:
   displaying the enhanced image with the number of enhanced elements being graphically emphasized on the display system.
Clause 16. The method of clause 14 or 15, wherein the machine learning model system comprises a first generative artificial intelligence model trained to generate the enhanced image and a second generative artificial intelligence model trained to generate the customized image.
Clause 17. The method of any one of clauses 14 to 16, wherein the second generative artificial intelligence model is selected from a group comprising a diffusion model, a latent diffusion model, a DALL-E 2 model, and a denoising diffusion probabilistic model.
Clause 18. The method of any one of clauses 14 to 17, wherein generating the enhanced image comprises:
   identifying, by the machine learning model system, the number of elements in the reference image using the element selection;
   creating, by the machine learning model system, a mask that identifies pixels representing the number of elements identified in the reference image; and
   changing, by the machine learning model system, the pixels representing the number of elements to create a number of modified regions for the number of elements to form the enhanced image with the number of enhanced elements, wherein the number of enhanced elements in the number of modified regions is visually distinguished from other elements outside of the number of modified regions in the enhanced image.
Clause 19. The method of any one of clauses 14 to 18, wherein modifying the number of enhanced elements comprises:
   identifying, by the machine learning model system, a set of changes to the enhanced elements using the element modification that takes into account the engineering data; and
   performing, by the machine learning model system, a diffusion from noise to the customized image using the set of changes identified to generate the customized image with changes to the number of enhanced elements to form the modified elements in the customized image.
Clause 20. The method of clause 19, wherein the set of changes to the number of enhanced elements is selected from at least one of a color, a material, a dimension, a shape, a position, a location, an orientation, a surface finish, or a coating.
Clause 21. The method of any one of clauses 14 to 20, wherein the number of elements is selected from at least one of a passenger seat, an overhead bin, a number of aisles, a seat cushion, a door, a light, a lighting system, an inflight entertainment system, a number of rows of passenger seats, or a seat formation.
Clause 22. The method of any one of clauses 14 to 21, wherein the element selection is selected from at least one of a text, a voice, or a touch gesture.
Clause 23. The method of any one of clauses 14 to 22, wherein the number of enhanced elements are identified in the enhanced image using at least one of a color, a highlight, a brightness, a boundary, a pattern change, or an animation.
Clause 24. The method of any one of clauses 14 to 23, wherein the engineering data defines a number of tolerances for at least one of a physics based parameter, a volume, a material, a dimension, a density, an elasticity, a rigidness, a surface texture, a temperature based material behavior, a size, a location, an orientation, or a weight.
Clause 25. The method of any one of clauses 14 to 24 further comprising:
   manufacturing a new aircraft using the design for the customized image.
Clause 26. The method of any one of clauses 14 to 25 further comprising:
   reconfiguring an existing aircraft using the design for the customized image.
Clause 27. A computer program product for generating a change to a design of an interior of an aircraft, the computer program product comprising:
   a set of one or more computer-readable storage media; and
   program instructions stored on the set of one or more storage media to perform operations comprising:
      identifying a reference image of the design of the interior of an aircraft,
      identifying engineering data for the design;
      receiving an element selection of a number of elements in the reference image of the design for modification;
      generating an enhanced image of the design using the number of elements in the reference image, the element selection, and the machine learning model system, wherein the number of elements in the enhanced image are a number of enhanced elements;
      receiving an element modification for modifying the number of enhanced elements in the enhanced image;
      modifying the number of enhanced elements using the element modification that takes into account the engineering data using the machine learning model system to form a customized image of the design with a number of modified elements in place of the number of enhanced elements; and
      displaying the customized image on a display system.
Clause 28. An interior design system comprising:
   a computer system;
   a generative artificial intelligence model system in the computer system; and
   a design generator in the computer system, wherein the design generator is configured to perform operations comprising:
      identifying a reference image of a design of a platform,
      identifying engineering data for the design;
      receiving an element selection of a number of elements in the reference image of the design for modification;
      generating an enhanced image of the design using the number of elements in the reference image, the element selection, and the machine learning model system, wherein the number of elements in the enhanced image are a number of enhanced elements;
      receiving an element modification for modifying the number of enhanced elements in the enhanced image;
      modifying the number of enhanced elements using the element modification that takes into account the engineering data using the machine learning model system to form a customized image of the design with a number of modified elements in place of the number of enhanced elements; and
      displaying the customized image on a display system.
Clause 29. The design system of clause 28, wherein the design is for at least one of an interior, a physical structure, or an exterior for the platform.
Clause 30. The design system of clause 28 or 29, wherein the platform is selected from a group comprising an aircraft, a commercial airplane, a cargo airplane, a rotorcraft, a tilt-rotor aircraft, a tilt wing aircraft, a vertical takeoff and landing aircraft, an unmanned aerial vehicle, an artificial intelligence controlled vehicle, an electric vertical takeoff and landing vehicle, a personal air vehicle, a surface ship, a cruise ship, a tank, a personnel carrier, a train, a spacecraft, a crewed spacecraft, a space plane, a submarine, a bus, an automobile, a power plant, a bridge, a dam, a house, a manufacturing facility, and a building.

In the different illustrative examples, the generation of the customized image with modifications to selected elements in the image for the design is based on input selecting the elements and identifying the modification. Further, these modifications take into account engineering data that provides information with respect to the elements. This information can also include what changes can be made to the elements. As a result, the changes made based on the modifications identified are changes that can actually be made to the design because engineering data for the design is taken into account.

As a result, the number of iterations between customers, design engineers, three-dimensional artists, and other personnel can be reduced. A process flow implemented in the design system in the illustrative examples uses machine learning models in a manner that reduces the need for multiple iterations of a process involving design engineers, three-dimensional artists, and customers.

In one example, the design system in the different illustrative examples can be used the first pass of a design for an interior of aircraft such as a passenger cabin in aircraft is generated. The design system in these examples enable performing multiple iterations based on customer feedback while reducing the amount of time and cost needed for revising or changing the design.

Further, these modifications in the customized images can be implemented into the design such that at least one of manufacturing or reconfiguring platforms, such as aircraft or other vehicles, can be performed more efficiently.

The description of the different illustrative embodiments has been presented for purposes of illustration and description and is not intended to be exhaustive or limited to the embodiments in the form disclosed. The different illustrative examples describe components that perform actions or operations. In an illustrative embodiment, a component can be configured to perform the action or operation described. For example, the component can have a configuration or design for a structure that provides the component an ability to perform the action or operation that is described in the illustrative examples as being performed by the component. Further, to the extent that terms "includes", "including", "has", "contains", and variants thereof are used herein, such terms are intended to be inclusive in a manner similar to the term "comprises" as an open transition word without precluding any additional or other elements.

Many modifications and variations will be apparent to those of ordinary skill in the art. Further, different illustrative embodiments may provide different features as compared to other desirable embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A design system (214) comprising:
a computer system (212);
a machine learning model system (225) in the computer system (212); and
a design generator (130, 214) in the computer system (212), wherein the design generator (130, 214) is configured to perform operations comprising:
identifying a reference image (134, 220, 300, 420, 500, 600, 700) of a design (201) of an interior (206) of an aircraft (204),
identifying engineering data (137, 221, 380) for the design (201);
receiving an element selection (222) of a number of elements (223) in the reference image (134, 220, 300, 420, 500, 600, 700) of the design (201) for modification;
generating an enhanced image (135, 224, 314, 423) of the design (201) using the number of elements (223) in the reference image (134, 220, 300, 420, 500, 600, 700), the element selection (222), and the machine learning model system (225), wherein the number of elements (223) in the enhanced image (135, 224, 314, 423) are a number of enhanced elements (223);
receiving an element modification (228) for modifying the number of enhanced elements (223) in the enhanced image (135, 224, 314, 423);
modifying the number of enhanced elements (223) using the element modification (228) that takes into account the engineering data (137, 221, 380) using the machine learning model system (225) to form a customized image (136, 229, 370, 425, 504, 604, 704) of the design (201) with a number of modified elements (223) in place of the number of enhanced elements (223); and
displaying the customized image (136, 229, 370, 425, 504, 604, 704) on a display system (231).

2. The design system (214) of claim 1, wherein the design generator (130, 214) is further configured to perform the operations comprising:
displaying the enhanced image (135, 224, 314, 423) with the number of enhanced elements (223) being graphically emphasized on the display system (231).

3. The design system (214) of claim 1 or 2, wherein
the machine learning model system (225) comprises a first generative artificial intelligence model trained to generate the enhanced image (135, 224, 314, 423) and a second generative artificial intelligence model trained to generate the customized image (136, 229, 370, 425, 504, 604, 704), and
preferably the second generative artificial intelligence model is selected from a group comprising a diffusion model, a latent diffusion model, a DALL-E 2 model, a denoising diffusion probabilistic model, a style domain adaptation model, a style transfer model, a generative adversarial network, an auto-encoder, a Gaussian Splatting model, a NeRF model, or a trilinear point splatting model.

4. The design system (214) of any one of claims 1 to 3, wherein in generating the enhanced image (135, 224, 314, 423), the design generator (130, 214) is configured to perform the operations comprising:
identifying, by the machine learning model system (225), the number of elements (223) in the reference image (134, 220, 300, 420, 500, 600, 700) using the element selection (222);
creating, by the machine learning model system (225), a mask that identifies pixels (242) representing the number of elements (223) identified in the reference image (134, 220, 300, 420, 500, 600, 700); and
changing, by the machine learning model system (225), the pixels (242) representing the number of elements (223) to create a number of modified regions (243) for the number of elements (223) to form the enhanced image (135, 224, 314, 423) with the number of enhanced elements (223), wherein the number of enhanced elements (223) in the number of modified regions (243) is visually distinguished from other elements (223) outside of the number of modified regions (243) in the enhanced image (135, 224, 314, 423).

5. The design system (214) of any one of claims 1 to 4, wherein in modifying the number of enhanced elements (223), the design generator (130, 214) is configured to perform the operations comprising:
identifying, by the machine learning model system (225), a set of changes (250) to the enhanced elements (223) using the element modification (228) that takes into account the engineering data (137, 221, 380); and
performing, by the machine learning model system (225), a diffusion from noise to the customized image (136, 229, 370, 425, 504, 604, 704) using the set of changes (250) identified to generate the customized image (136, 229, 370, 425, 504, 604, 704) with changes (250) to the number of enhanced elements (223) to form the modified elements (223) in the customized image (136, 229, 370, 425, 504, 604, 704); wherein preferably the set of changes (250) to the number of enhanced elements (223) is selected from at least one of a color, a material, a dimension, a shape, a position, a location , an orientation, a surface finish, or a coating.

6. The design system (214) of any one of claims 1 to 5, wherein the number of elements (223) is selected from at least one of a passenger seat, an overhead bin, a number of aisles, a seat cushion, a door, a light, a lighting system, an inflight entertainment system, a number of rows of passenger seats, or a seat formation.

7. The design system (214) of any one of claims 1 to 6, wherein the element selection (222) is selected from at least one of a text, a voice, or a touch gesture.

8. The design system (214) of any one of claims 1 to 7, wherein the number of enhanced elements (223) are identified in the enhanced image (135, 224, 314, 423) using at least one of a color, a highlight, a brightness, a boundary, a pattern change, or an animation.

9. The design system (214) of any one of claims 1 to 8, wherein the engineering data (137, 221, 380) defines a number of tolerances for at least one of a physics based parameter, a volume, a material, a dimension, a density, an elasticity, a rigidness, a surface texture, a temperature based material behavior, a size, a location, an orientation, or a weight.

10. The design system (214) of any one of claims 1 to 9, wherein a new aircraft is manufactured using the design (201) for the customized image (136, 229, 370, 425, 504, 604, 704), or wherein an existing aircraft is reconfigured using the design (201) for the customized image (136, 229, 370, 425, 504, 604, 704).

11. A method for generating a change to a design (201) of an interior (206) of an aircraft (204), the method comprising:
identifying (800) a reference image (134, 220, 300, 420, 500, 600, 700) of the design (201) of the interior (206) of an aircraft (204);
identifying (802) engineering data (137, 221, 380) for the design (201);
receiving (804) an element selection (222) of a number of elements (223) in the reference image (134, 220, 300, 420, 500, 600, 700) of the design (201) for modification;
generating an enhanced image (135, 224, 314, 423) of the design (201) using the number of elements (223) in the reference image (134, 220, 300, 420, 500, 600, 700), the element selection (222), and the machine learning model system (225), wherein the number of elements (223) in the enhanced image (135, 224, 314, 423) are a number of enhanced elements (223);
receiving an element modification (228) for modifying the number of enhanced elements (223) in the enhanced image (135, 224, 314, 423);
modifying (810) the number of enhanced elements (223) using the element modification (228) that takes into account the engineering data (137, 221, 380) using the machine learning model system (225) to form a customized image (136, 229, 370, 425, 504, 604, 704) of the design (201) with a number of modified elements (223) in place of the number of enhanced elements (223); and
displaying (812) the customized image (136, 229, 370, 425, 504, 604, 704) on a display system (231).

12. The method of claim 11 further comprising:
displaying (900) the enhanced image (135, 224, 314, 423) with the number of enhanced elements (223) being graphically emphasized on the display system (231).

13. The method of claim 11 or 12, wherein the machine learning model system (225) comprises a first generative artificial intelligence model trained to generate the enhanced image (135, 224, 314, 423) and a second generative artificial intelligence model trained to generate the customized image (136, 229, 370, 425, 504, 604, 704).

14. The method of claim 13, wherein the second generative artificial intelligence model is selected from a group comprising a diffusion model, a latent diffusion model, a DALL-E 2 model, and a denoising diffusion probabilistic model.

15. The method of any one of claims 11 to 14 , wherein generating the enhanced image (135, 224, 314, 423) comprises:
identifying (1000), by the machine learning model system (225), the number of elements (223) in the reference image (134, 220, 300, 420, 500, 600, 700) using the element selection (222);
creating (1002), by the machine learning model system (225), a mask that identifies pixels (242) representing the number of elements (223) identified in the reference image (134, 220, 300, 420, 500, 600, 700); and
changing (1004), by the machine learning model system (225), the pixels (242) representing the number of elements (223) to create a number of modified regions (243) for the number of elements (223) to form the enhanced image (135, 224, 314, 423) with the number of enhanced elements (223), wherein the number of enhanced elements (223) in the number of modified regions (243) is visually distinguished from other elements (223) outside of the number of modified regions (243) in the enhanced image (135, 224, 314, 423).
